# EUROPEAN PATENT SPECIFICATION

(11) **EP 0 748 764 B1**
(45) Date of publication and mention of the grant of the patent: **19.09.2001**
(21) Application number: 96108559.4
(22) Date of filing: 29.05.1996
(51) Int. Cl.: C01B 15/10

(54) **Process for producing sodium percarbonate in granular form**
Verfahren zur Herstellung von kornförmigem Natriumperkarbonat
Procédé de préparation de percarbonate de sodium sous forme de granulés

(30) Priority: 08.06.1995 IT MI951217
(43) Date of publication of application: 18.12.1996
(73) Proprietor: AUSIMONT S.p.A., I-20121 Milano (IT); INDUSTRIE CHIMICHE CAFFARO S.p.A., I-20121 Milano (IT)
(72) Inventor: Troglia, Claudio, Milano (IT); Stramezzi, Pietro, Crema, Cremona (IT); Antonelli, Paolo, Nave, Brescia (IT); Donelli, Giordano, Brescia (IT)
(74) Representative: Sama, Daniele, Dr.

(56) References cited:
- FR-A- 2 318 112
- GB-A- 1 165 154
- GB-A- 1 191 571
- GB-A- 1 469 352
- GB-A- 2 011 874

## Description

The present invention relates to a process for producing sodium percarbonate by reaction between sodium carbonate and hydrogen peroxide.

The use of sodium percarbonate as active component in bleaching and/or detergent formulations is known. Such a product is usually used in granular form. To obtain satisfactory performances the granules must show a regular morphology as mucn as possible, with restricted granulometric distribution. Moreover, it is necessary that the product has good intrinsic (chemical) and mechanical stability and, considering the rising request of compact formulations, high apparent density.

A granulate with such characteristics must be, moreover, obtainable by an industrial process characterized by specific low consumptions of raw materials and energy, high safety both for operators and environment, and effluents of limited volume and free from harmful products.

The Applicants have now found a process for producing sodium percarbonate as hereunder defined, which fully meets the above requirements and allows to obtain a granulate having high apparent density, high intrinsic stability and mechanical resistance, consisting of particles having spheroidal morphology and controlled granulometric distribution and free from fine particles.

Subject matter of the present invention is therefore a process for producing sodium percarbonate in granular form having high apparent density, high intrinsic stability, high mechanical resistance and controlled granulometric distribution, comprising the following steps:
(a) preparing a solution or suspension (slurry) of sodium carbonate in water;
(b) continuously feeding into a reactor the sodium carbonate solution or suspension and an aqueous solution of hydrogen peroxide (H₂O₂) in the presence of an hydrogen peroxide stabilizer selected from phosphorous-containing organic products, so as to obtain precipitation of sodium percarbonate;
(c) separating sodium percarbonate from mother waters;
(d) recycling at step a) a flow of the mother waters, previous their concentration and decomposition of the residual hydrogen peroxide,
wherein in steps (a) and (b) are not used magnesium salts.

In step (a), the carbonate is preferably used in the form of suspension, with a concentration generally comprised from 20 to 60% by weight, preferably from 40 to 50% by weight. In case a solution of sodium carbonate is used, this has preferably a concentration near the saturation.

The hydrogen peroxide stabilizer is selected from phosphorous containing organic products, such as salts of phosphonic acids, etc. It is added in amounts generally comprised between 0.5 and 10 g of phosphorous per liter of mother waters.

The presence of a stabilizer is essential to avoid the decomposition of the hydrogen peroxide, with formation of gaseous oxygen, which would cause various problems essentially connected to uncontrolled alterations of the fluid dynamic regime of the reactor, with formation of high amounts of fine particles.

Further known components can be added to the sodium carbonate solution or suspension, such as:
(i) products capable to reduce the percarbonate solubility, such as soluble inorganic salts, for instance sodium chloride, sodium sulphate, sodium carbonate, and the like, in such amounts to have a concentration in the mother waters comprised between 5 and 25% by weight, preferably between 15 and 20% by weight.
(ii) products adjusting the morphology of the final granulate (morphoactive agents), for instance polycarboxylic polymers, such as in particular: polyacrylates, copolymers of maleic anhydride and methylvinylether or of maleic anhydride and ethylene (see for instance **EP Patent 18,896)**; they are added in proportional amounts to the fed carbonate, generally comprised between 0.05 and 0.5% by weight preferably between 0.1 and 0.3% by weight, with respect to the total amount of fed carbonate.

In step (b) the reactor can advantageously be equipped with a system of external recircle, which allows the thermal regulation of the reaction system, and, by generating an upward flow inside the reactor, achieves a separator function (classifier) of the fine particles from the greater crystals. The internal temperature of the reactor at running conditions is generally kept between 5° and 40°C, preferably between 15° and 25°C.

The addition of the hydrogen peroxide stabilizer and of the other additives optionally present can be carried out in any step of the process, preferably in the recircle steps above mentioned, or during the concentration step of the mother waters to be recycled, so as to favour the solubilization threof.

In step b) the fed aqueous solution of H₂O₂ has generally a concentration comprised between 30 and 70% by weight, preferably between 50 and 70% by weight.

The separation of the sodium percarbonate crystals of step c) is carried out according to conventional techniques, such as centrifugation or filtering.

The thus obtained crystals are then submitted to drying, for instance by treatment with a hot air flow, and, optionally, to conventional post-treatment processes, for instance to stabilization processes to increase the compatibility with the other components of the detergent formulations.

In step d) mother waters are, partially or wholly, recycled. Such a recycle requires the previous reduction or removal of the hydrogen proxide residual amount in order, to limit as much as possible the formation of percabonate already during the preparation of the solution or suspension of step a). As shown from the experimentation carried out by the Applicants, the uncontrolled presence of sodium percarbonate crystals in the solution or suspension fed to the reactor leads to an alteration of the reactor fluid dynamic regime and of the granulometic distribution of the final product.

The decomposition of the hydrogen peroxide in step d) is preferably carried out by heating till boiling, so as to reduce as much as possible the amount of the residual hydrogen peroxide in the mother waters recycled to step a), preferably up to values lower than 1.5% by weight. In such a way also the desired concentration of mother waters is obtained by partial evaporation of water till the removal of the part in excess of water, that is, the part of water in excess deriving from hydrogen peroxide or from fresh water optionally introduced in the cycle.

In step a) it is possible to recycle a mixed flow consisting of mother waters reconcentrated and free from hydrogen peroxide and in mother waters as such. By varying the ratio between the two types of mother waters it is possible to modify the morphological and ganulometric characteristics of the final product. In any case, such a ratio has to be such as to have a low residual amount of hydrogen peroxide, preferably lower than 1.5% by weight.

The process object of the present invention can be carried out in batch or, preferably, in continuous way.

A further object of the present invention is sodium percarbonate in granular form, obtainable according to the process of the present invention, having the following characteristics:
(1) Granulometric distribution:
   - amount of particles having diameter lower than 0.2 mm: lower than 2% by weight, preferably lower than 1% by weight;
   - amount of particles having diameter higher than 0.425 mm: higher than 80% by weight, preferably higher than 90% by weight;
   - amount of particles having diameter higher than 1 mm: comprised from 0 to 30% by weight, preferably from 0 to 20% by weight.
(2) Apparent density: ranging from 900 to 1200 g/l, preferably from 1000 to 1100 g/l.
(3) Brittleness: lower than 10% by weight, preferably lower than 5% by weight (measured according to Standard ISO 5937/1980 described hereinafter).
(4) Intrinsic stability: percent decrease of the content of active oxygen after thermal treatment in moist air (see hereunder): lower than 10%, preferably lower than 5%.

The granulometric distribution is measured by conventional techniques, for instance by sieving.

The brittleness is a measurement of the mechanical resistance of the product, and is determined according to Standard ISO 5937/1980, modified to conform it to the characteristics of the sodium percarbonate, that is, by using an orifice of 0.65 mm instead of 0.4 mm, whereby with the same pressure of 290-330 hPa the fluidization air rate is equal to 13.5 l/min. The percent decrease of active oxygen (Δ AVOX %) is determined after keeping the product in an open vessel in an air-conditioned room at 50°C and 80% of relative moisture for 6 weeks. The active oxygen percent is measured by permanganometric titration.

The present invention will be now better illustrated by the following examples, the purpose of which is merely illustrative and not limitative of the scope of the invention.

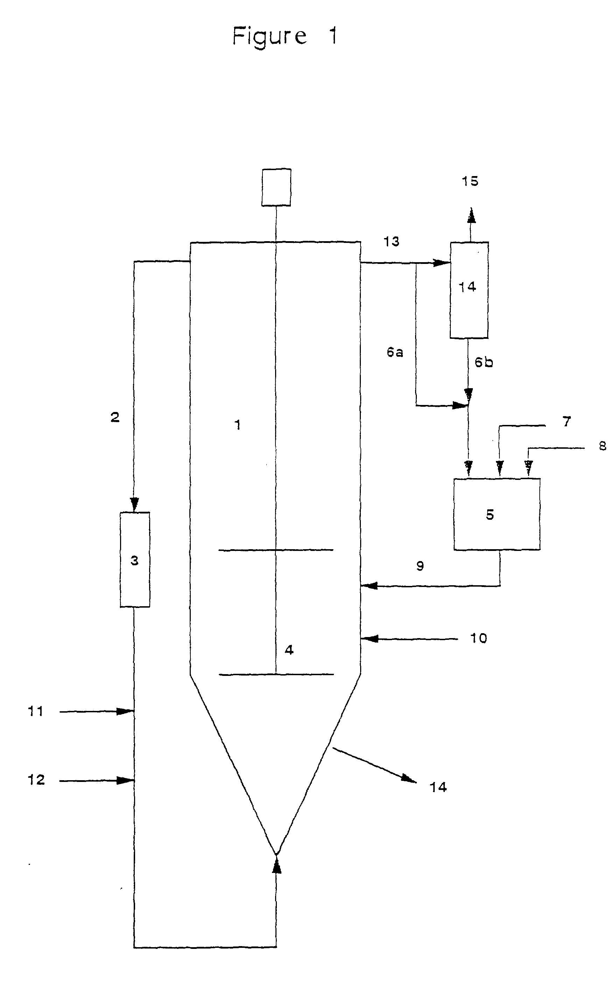

For the tests an equipment was used having a schematic representation of Fig. 1 . The reactor (1) consists of a cylindrical part having a diameter of 200 mm and height of 1200 mm, wherein the formation and decantation of percarbonate crystals occurs, and of an underneath conic part having an height equal to 800 mm. The total volume of the reactor is 46 liters. The recircle of the mother waters takes place through the external line (2) which connects the top of the reactor (1) with the bottom: an upward flow is thus generated inside the reactor (1) and, therefore. the desired granulometric classification of the crystals is obtained.
The heat exchanger (3), arranged on the recircle line (2), assures the control of the reaction temperature. The internal stirrer (4) assures a suitable homogenization of the reactants and a suitable density of the magma of the percarbonate crystals in the reaction zone. The sodium carbonate suspension or solution is continuously or discontinuously prepared in the dispersion apparatus (5) by addition to the recycled mother waters (6a, 6b) of sodium carbonate (7) and of sodium chloride (8). Through the feeding line (9) such suspension or solution is continuously fed into the reactor (1), contemporaneously with the solution of hydrogen peroxide (10). The hydrogen peroxide stabilizer (11) and the other additives (12) are fed on the recircle line (2), but they can be fed also in the dispersion apparatus (5). The excess of mother waters is drained by the top of the reactor through overflow (13) and is sent (wholly or partly) to a decomposer/concentrator (14), wherein by heating to boiling, the hydrogen peroxide is decomposed and contemporaneously the amount of water in excess (15), necessary to close the water balance, is evaporated. The mother waters resulting from such operation are then recycled to the dispersion apparatus (5) through the line (6b). A portion of the mother waters can be recycled as such, without passing through the decomposer/concentrator (14), to the dispersion apparatus (5) through line (6a). The thick magma of percarbonate crystals having the desired granulometry is drawn from the reactor bottom (1) through the outlet line (14), separated from the liquid and dried.

### EXAMPLE 1

The equipment described above was filled with synthetic mother waters having a composition analogous to the one assumed to have in running conditions. The recircle flow through line (2) was started with a flow-rate of 150 l/hour, by keeping the flow temperature at 20°C by means of the heat exchanger (3). The excess of mother waters (13) was fully sent to the decomposer/concentrator (14), wherein by heating at the boiling temperature, the hydrogen peroxide was decomposed and contemporaneously the amount of water in excess (15) necessary to close the water balance was evaporated. A feeding suspension at 43% by weight of Na₂CO₃ was continuously prepared in the dispersion apparatus (5), by feeding 4,050 g/hour of concentrated mother waters (6b), 2,750 g/hour of 98% anhydrous Na₂CO₃ (7), and 60 g/hour of sodium chloride (8). Such suspension was continously fed in the reactor (1) through a metering pump (not shown in Fig. 1) with a flow rate of 6,860 g/hour. At the same time, a 70% by weight aqueous solution of H₂O₂ was continuously fed into the reactor (1) through a metering pump (not shown in Fig. 1) with a flow-rate of 1,480 g/hour. When the precipitation of the percarbonate was noticed, it was started to introduce into the recycle line the stabilizer Sequion^{(R)} 10 H (hydroxy-ethylidendiphosphonic acid), in aqueous solution added with NaOH up to pH = 10.5, with a flow rate of 120 g/hour, and the morphoactive agent Gantrex^{(R)} (maleic anhydride/methylvinylether copolymer), in aqueous solution added with NaOH up to pH = 10.5, with a flow-rate of 6 g/hour.
The other processing conditions are reported in Table 1. When the crystals thickened on the bottom of the reactor reached the level of the inlet point of the reactants, the magma was drawn through a timed valve, so as to maintain constant the crystals level, with an average flow rate equal to 4,160 g/hour of dry percarbonate. After 3 hours of running the system reached the working conditions and the percarbonate characteristics remained constant in the time. The product was centrifuged and dried in a fluid bed drier and then characterized as described above. The results are reported in Table 2.

### EXAMPLE 2

Example 1 was repeated under the same conditions, except that the mother waters recycled to the dispersion apparatus (5) were constituted for 50% by mother waters (6a) (flow equal to 2,025 g/hour) and for the remaining 50% by mother waters (6b) submitted to the decomposition/concentration treatment described above (flow equal to 2,025 g/hour). Since a portion of the hydrogen peroxide necessary to the reaction derived from the undissolved recycled mother waters (6a), the feeding of the hydrogen peroxide (10) was reduced to 1,390 g/hour. The other processing conditions are reported in Table 1, and the characteristics of the obtained sodium percarbonate are reported in Table 2.

### EXAMPLE 3 (Comparative)

Example 1 was repeated under the same conditions, except that the 100% of the mother waters in excess (13) were recycled to the dispersion apparatus (5) without passing thourgh the decomposer/concentrator (14), with a flow equal to 4,050 g/hour. Since a portion of the hydrogen peroxide necessary to the reaction derived from the mother waters, the feeding of the hydrogen peroxide (10) was reduced to 1,310 g/hour. The other processing conditions are reported in Table 1. After 2 hours of running, the test had to be stopped owing to the accumulation of very fine crystals, so fine as to remain in suspension without sedimenting in the cylindrical section of the reactor (1). The thus obtained product was not characterized as being of difficult handling just owing to the excessive presence of fine particles.

### EXAMPLE 4 (comparative)

Example 1 was repeated under the conditions reported in table 1, without using the hydrogen peroxide stabilizer. Just from the beginning of the introduction of the mother waters, the developing of a considerable amount of oxygen bubbles, due to the decomposition of the hydrogen peroxide, was noticed.
In order to maintain constant the concentration of the hydrogen peroxide in the mother waters the feeding flow of the H₂O₂ solution was increased of about 15%. After the beginning of the percarbonate precipitation, it was noticed that the gas bubbles caused the flotation of the fine particle making the sedimentation impossible and therefore the maintenance in the reaction zone. Besides, the fine crystals, overflowing from the reactor and re-entering from the bottom through the recircle line, hindered the normal growth of the granules and the achievement of the desired granulometry. The obtained product contained a part of such recycled crystals and was rich in powder. The characteristic of the obtained product are reported in table 2.

### EXAMPLES 5-8

Example 1 was repeated by varying the processing conditions as indicated in table 1. The characteristics of the obtained products are reported in table 2.

### EXAMPLE 9

Example 1 was repeated under the conditions reported in Table 1, utilizing as morphoactive agent a mixture consisting of Geropon^{(R)} DA (ammonium polyacrylate) and of sodium hexamethaphosphate, in the form of aqueous solution added with NaOH up to pH = 10.5, fed in such amount to have a flow rate of 12 g/hour of Geropon^{(R)} DA and 15 g/hour of sodium hexamethaphosphate. The characteristics of the obtained product are reported in Table 2.

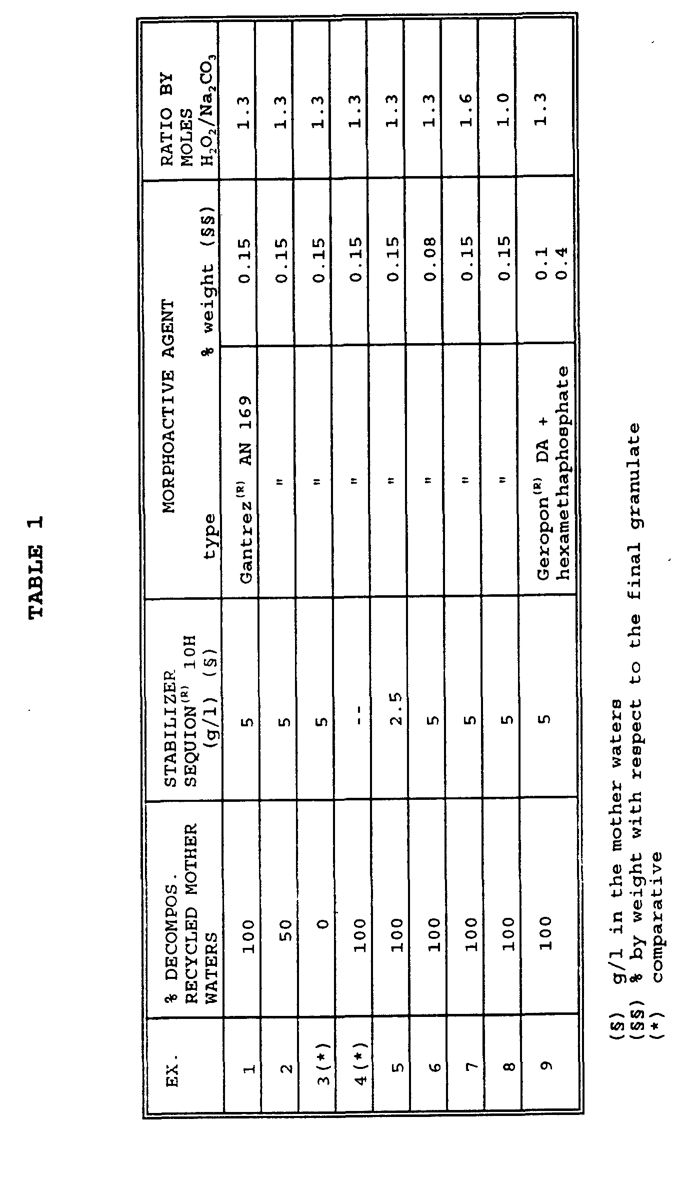

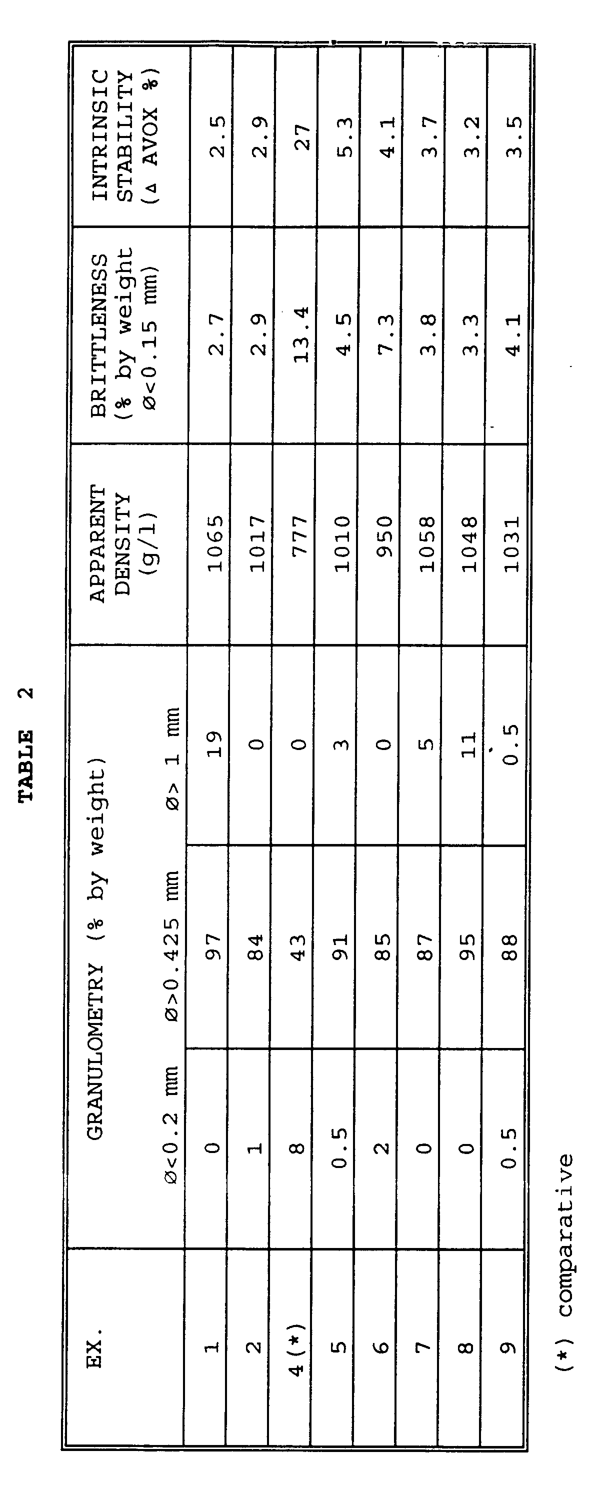

## Claims

1. A process for producing sodium percarbonate in granular form having high apparent density, high intrinsic stability, high mechanical resistance and controlled granulometric distribution, comprising the following steps:
(a) preparing a solution or suspension (slurry) of sodium carbonate in water;
(b) continuously feeding in a reactor the sodium carbonate solution or suspension and an aqueous solution of hydrogen peroxide (H₂O₂) in the presence of a hydrogen peroxide stabilizer selected from the phosphorous-containing organic products, so as to obtain precipitation of sodium percarbonate;
(c) separating sodium percarbonate from mother waters;
(d) recycling at step a) a flow of the mother waters previous concentration and decomposition of the residual hydrogen peroxide.
wherein in steps (a) and (b) are not used magnesium salts.

2. The process according to claim 1, wherein in step (a) a suspension of sodium carbonate is prepared at a concentration comprised between 20 and 60% by weight.

3. The process according to anyone of the preceding claims, wherein in step (b) the hydrogen peroxide stabilizer is present in amount comprised between 0.5 and 10 g of phosphorous per liter of mother waters.

4. The process according to anyone of the preceding claims, wherein the sodium carbonate solution or suspension is further added with one or more components selected from the group consisting of: (i) products capable to decrease the solubility of the percarbonate, in such an amount to have a concentration in the mother waters comprised between 5 and 25% by weight; (ii) products adjusting the morphology of the final granulate (morphoactive agents), in amounts comprised between 0.05 and 0.5 % by weight, with respect to the total amount of fed carbonate.

5. The process according to anyone of the preceding claims, wherein the reactor is equipped with a system of external recircle.

6. The process according to anyone of the preceding claims, wherein the internal temperature of the reactor in the running conditions is comprised between 5° and 40°C.

7. The process according to anyone of the preceding claims, wherein the mother waters to be recycled are concentrated in step (d) and the residual hydrogen peroxide is decomposed by heating up to the boiling temperature.

8. The process according to anyone of the preceding claims, wherein the concentration of the residual hydrogen peroxide in the mother waters to be recycled to the step (a) is decreased up to values lower than 1.5% by weight.

9. The process according to anyone of the preceding claims, wherein a mixed flow consisting of mother waters reconcentrated and free from hydrogen peroxide and from mother waters as such is recycled to step (a).

10. A sodium percarbonate in granular form, having the following characteristics: (1) granulometric distribution such that the amount of particles having diameter lower than 0.2 mm is lower than 2% by weight, the amount of particles having diameter higher than 0.425 mm is higher than 80% by weight, the amount of particles having diameter higher than 1 mm is comprised between 0 and 30% by weight; (2) apparent density comprised between 900 and 1200 g/l; (3) brittleness lower than 10% by weight, measured according to Standard ISO 5937/1980; (4) intrinsic stability lower than 10%, measured as percent decrease of the content of active oxygen (Δ AVOX %) after maintenance of the percarbonate in open vessel in an air-conditioned room at 50°C and 80% of relative moisture for 6 weeks.

## Patentansprüche

1. Verfahren zur Herstellung von Natriumpercarbonat in kornförmiger Form mit einer hohen Schüttdichte, einer hohen intrinsischen Stabilität , einem hohen mechanischen Widerstand und einer kontrollierten Korngrößenverteilung, umfassend die folgenden Stufen:
(a) Herstellung einer Lösung oder Suspension (Aufschlämmung) von Natriumcarbonat in Wasser;
(b) kontinuierliches Einspeisen der Natriumcarbonatlösung oder -suspension und einer wässerigen Wasserstoffperoxidlösung (H2O2) in Gegenwart eines Wasserstoffperoxidstabilisators ausgewählt aus phosphor-haltigen organischen Verbindungen in einem Reaktor, um eine Ausfällung von Natriumpercarbonat zu erhalten;
(c) Abtrennen des Natriumpercarbonats von den Mutterlaugen;
(d) Zurückführen eines Flusses der Mutterlaugen in Stufe (a) nach vorheriger Konzentrierung und Zersetzung des restlichen Wasserstoffperoxids,
wobei in den Stufen (a) und (b) keine Magnesiumsalze verwendet werden.

2. Verfahren nach Anspruch 1, wobei in Stufe (a) eine Suspension aus Natriumcarbonat in einer Konzentration zwischen 20 und 60 Gew.-% hergestellt wird.

3. Verfahren nach einem der vorstehenden Ansprüche, wobei in Stufe (b) der Wasserstoffperoxidstabilisator in einer Menge zwischen 0,5 und 10 g Phosphor pro Liter Mutterlaugen vorhanden ist.

4. Verfahren nach einem der vorstehenden Ansprüche, wobei die Natriumcarbonatlösung oder -suspension weiter mit einer oder mehreren Komponente(n) ausgewählt aus der Gruppe (i) Produkte mit der Fähigkeit die Löslichkeit von Percarbonat so weit zu erniedrigen, dass die Konzentration in den Mutterlaugen zwischen 5 und 25 Gew.-% liegt; (ii) Produkte, die die Morphologie des abschließend erhaltenen Granulats einstellen (morphoaktive Mittel), in Mengen zwischen 0,05 und 0,5 Gew.-% bezogen auf die Gesamtmenge an eingespeistem Carbonat versetzt wird.

5. Verfahren nach einem der vorstehenden Ansprüche, wobei der Reaktor mit einem externen Rückführungssystem ausgestattet ist.

6. Verfahren nach einem der vorstehenden Ansprüche, wobei die Innentemperatur des Reaktors unter Betriebsbedingungen zwischen 5° und 40°C liegt.

7. Verfahren nach einem der vorstehenden Ansprüche, wobei die zurückzuführenden Mutterlaugen in Stufe (d) konzentriert werden und das restliche Wasserstoffperoxid durch Erhitzen bis zur Siedetemperatur zersetzt wird.

8. Verfahren nach einem der vorstehenden Ansprüche, wobei die Konzentration des restlichen Wasserstoffperoxids in den in Stufe (a) zurückzuführenden Mutterlaugen auf Werte von niedriger als 1,5 Gew.-% erniedrigt wird.

9. Verfahren nach einem der vorstehenden Ansprüche, wobei ein gemischter Fluss aus rekonzentrierten und wasserstoffperoxidfreien Mutterlaugen und Mutterlaugen als solchen in Stufe (a) zurückgeführt wird.

10. Natriumpercarbonat in granulärer Form mit den folgenden Eigenschaften: (1) Korngrößenverteilung, so dass die Menge der Teilchen mit einem Durchmesser von geringer als 0,2 mm niedriger als 2 Gew.-% ist, die Menge an Teilchen mit einem Durchmesser von größer als 0,425 mm größer als 80 Gew.-% ist, die Menge an Teilchen mit einem Durchmesser von größer als 1 mm zwischen 0 und 30 Gew.-% liegt; (2) die Schüttdichte zwischen 900 und 1200 g/l liegt; (3) die Sprödigkeit niedriger als 10 Gew.-% ist, gemessen nach Standard ISO 5937/1980; (4) die intrinsische Stabilität niedriger als 10 %, gemessen als prozentuale Abnahme des Gehaltes an aktivem Sauerstoff (Δ AVOX %) nach Halten des Percarbonats in einem offenen Gefäß in einem auf 50 °C und 80% relative Luftfeuchtigkeit temperierten Raum für 6 Wochen.

## Revendications

1. Procédé pour produire du percarbonate de sodium sous forme granulaire ayant une densité apparente élevée, une stabilité intrinsèque élevée, une résistance mécanique élevée et une distribution de granulométrie contrôlée, comprenant les étapes suivantes :
(a) préparation d'une solution ou suspension (bouillie) de carbonate de sodium dans de l'eau ;
(b) introduction en continu dans un réacteur de la solution ou suspension de carbonate de sodium et d'une solution aqueuse de peroxyde d'hydrogène (H₂O₂) en présence d'un stabilisant de peroxyde d'hydrogène choisi parmi les produits organiques contenant du phosphore, de façon à obtenir une précipitation de percarbonate de sodium ;
(c) séparation du percarbonate de sodium à partir des liqueurs mères ;
(d) recyclage à l'étape a) d'un flux des liqueurs mères avant concentration et décomposition du peroxyde d'hydrogène résiduel,
dans lequel, dans les étapes (a) et (b), on n'utilise pas de sels de magnésium.

2. Procédé selon la revendication 1, dans lequel, dans l'étape (a), une suspension de carbonate de sodium est préparée à une concentration comprise entre 20 et 60 % en poids.

3. Procédé selon l'une quelconque des revendications précédentes, dans lequel, dans l'étape (b), le stabilisant de peroxyde d'hydrogène est présent en une quantité comprise entre 0,5 et 10 g de phosphore par litre de liqueurs mères.

4. Procédé selon l'une quelconque des revendications précédentes, dans lequel la solution ou suspension de carbonate de sodium est en outre additionnée d'un ou plusieurs composants choisis dans le groupe constitué par : (i) les produits capables de diminuer la solubilité du percarbonate, en une quantité telle qu'ils aient une concentration dans les liqueurs mères comprise entre 5 et 25 % en poids, (ii) les produits ajustant la morphologie du granulat final (agent morpho-actifs), en des quantités comprises entre 0,05 et 0,5 % en poids, par rapport à la quantité totale de carbonate introduit.

5. Procédé selon l'une quelconque des revendications précédentes, dans lequel le réacteur est équipé d'un système de recirculation externe.

6. Procédé selon l'une quelconque des revendications précédentes, dans lequel la température interne du réacteur dans les conditions de fonctionnement est comprise entre 5° et 40°C.

7. Procédé selon l'une quelconque des revendications précédentes, dans lequel les liqueurs mères à recycler sont concentrées dans l'étape (d) et le peroxyde d'hydrogène résiduel est décomposé par chauffage à la température d'ébullition.

8. Procédé selon l'une quelconque des revendications précédentes, dans lequel la concentration du peroxyde d'hydrogène résiduel dans les liqueurs mères à recycler à l'étape (a) est diminuée jusqu'à des valeurs inférieures à 1,5 % en poids.

9. Procédé selon l'une quelconque des revendications précédentes, dans lequel un flux mixte constitué de liqueurs mères reconcentrées et exemptes de peroxyde d'hydrogène et de liqueurs mères telles quelles est recyclé vers l'étape (a).

10. Percarbonate de sodium sous forme granulaire, ayant les caractéristiques suivantes : (1) une distribution de granulométrie telle que la quantité de particules ayant un diamètre inférieur à 0,2 mm soit inférieure à 2 % en poids, la quantité de particules ayant un diamètre supérieur à 0,425 mm soit supérieure à 80 % en poids, la quantité de particules ayant un diamètre supérieur à 1 mm soit comprise entre 0 et 30 % en poids ; (2) une masse volumique apparente comprise entre 900 et 1200 g/l ; (3) une friabilité inférieure à 10 % en poids, mesurée conformément à la norme ISO 5937/1980 ; (4) une stabilité intrinsèque inférieure à 10 %, mesurée par le pourcentage de diminution de la teneur en oxygène actif (Δ AVOX %) après maintien du percarbonate dans un récipient ouvert dans une pièce avec air conditionné à 50°C et sous une humidité relative de 80 % pendant 6 semaines.
